# EUROPEAN PATENT APPLICATION

(11) **EP 4 321 278 A1**
(43) Date of publication of application: **14.02.2024**
(21) Application number: 23186000.8
(22) Date of filing: 18.07.2023
(51) Int. Cl.: B22F 1/05, B22F 1/10, B22F 1/103, B22F 3/10, B22F 7/06, B22F 10/64, B33Y 40/20, C04B 35/638

(54) **JOINED PARTS COMPRISING A JOINT MATERIAL**

(30) Priority: 10.08.2022 US 202263396721 P
(71) Applicant: General Electric Company, Schenectady, NY 12345 (US)
(72) Inventor: NATARAJAN, Arunkumar, Schenectady, 12345 (US); CHAN, Kwok Pong, Schenectady, 12345 (US); ALBERTS, William C., Schenectady, 12345 (US); SHIVANATHAN, Sivaruban, Schenectady, 12345 (US); DILGER, Elliot C., Schenectady, 12345 (US); WILSON, Gregg H., Schenectady, 12345 (US)
(74) Representative: Hafner & Kohl PartmbB

(57) **Abstract**

A green body part (360) comprises a first green portion (340a), a second green portion (340b), an interfacial joint (362) between the first green portion (340a) and the second green portion (340b), and a joint material (350) disposed within the interfacial joint (362). The joint material (350) comprises a powder having a particle size distribution than or equal to 1 µm and less than or equal to 50 µm. A method of manufacturing a joined part (360) includes applying a joint material (350) on a face (352) of the first green portion (340a) and contacting the second green portion (340b) to the joint material (350) on the face (352) of the first green portion (340a) to form a joined green body part (360).

## Description

### TECHNICAL FIELD

The present specification relates to additive manufacturing. More specifically, the present specification is directed to additively manufactured joined parts comprising a joint material.

### TECHNICAL BACKGROUND

Additive manufacturing, also known as three-dimensional (3D) printing, is a process in which material is built up layer-by-layer to form an object. Binder jetting is an additive manufacturing technique based on the use of a binder to join particles of a powder to form a 3D object. In particular, the binder is jetted onto successive layers of the powder in a build volume, where layers of the powder and the binder adhere to one another to form a 3D object.

Two or more binder jetted parts may be joined (e.g., using sinter joining) to form objects having a relatively complex shape or large size that could not be obtained by printing a single part. However, binder jetted parts may have uneven surfaces. Therefore, the joining process may suffer from porosity at the j oint interface, resulting in reduced j oint strength.

Accordingly, a need exists for additively manufactured parts having a seamless joint.

### SUMMARY

Various aspects of green body parts disclosed herein meet these needs by including a joint material with a powder having a particle size distribution greater than or equal to 1 µm and less than or equal to 50 µm, which fills the uneven surfaces of joined green portions to produce a seamless joint and, thereby, improve the strength of the joined part.

According to a first aspect A1, a green body part may comprise: a first green portion comprising a first plurality of layers of a first particulate material; a second green portion comprising a second plurality of layers of a second particulate material; an interfacial joint between the first green portion and the second green portion; and a joint material disposed within the interfacial joint, the joint material comprising a powder having a particle size distribution greater than or equal to 1 µm and less than or equal to 50 µm.

A second aspect A2 includes the green body part according to the first aspect A1, wherein the powder comprises a metallic powder, the metallic powder comprising at least one of nickel alloy, stainless steel alloy, cobalt-chromium alloy, aluminum alloy, iron alloy, titanium alloy, copper alloy, and copper nickel alloy.

A third aspect A3 includes the green body part according to the first aspect A1, wherein the powder comprises a ceramic powder, the ceramic powder comprising at least one of alumina, aluminum nitride, zirconia, titania, silica, silicon nitride, silicone carbide, and boron nitride.

A fourth aspect A4 includes the green body part according to any one of the first through third aspects A1-A3, wherein the joint material further comprises a binder, the binder comprising a plurality of reactive monomers.

A fifth aspect A5 includes the green body part according to the first aspect A4, wherein the binder further comprises a thickening agent.

A sixth aspect A6 includes the green body part according to the fifth aspect A5, wherein the thickening agent comprises at least one of polystyrene, polycarbonate, and polyvinylpyrrolidone.

A seventh aspect A7 includes the green body part according to the fifth aspect A5 or sixth aspect A6, wherein the thickening agent has a molecular weight greater than or equal to 10,000 g/mol and less than or equal to 50,000 g/mol.

An eighth aspect A8 includes the green body part according any one of to the first through seventh aspects A1-A7, wherein a weight ratio of the powder to the binder in the joint material is from 3:1 to 8:1.

A ninth aspect A9 includes the green body part according any one of to the first through eighth aspects A1-A8, wherein the joint material comprises greater than or equal to 75 wt% and less than or equal to 88 wt% of the powder and 12 wt% and less than or equal to 25 wt% of the binder.

A tenth aspect A18 includes the green body part according any one of to the first through ninth aspects A1-A9, wherein the joint material has a viscosity greater than or equal to 100 cP to and less than or equal to 50,000 cP.

An eleventh aspect A11 includes the green body part according any one of to the first through tenth aspects A1-A10, wherein the plurality of reactive monomers comprises at least one of epoxy monomers, acrylate monomers, and vinyl ether monomers.

A twelfth aspect A12 includes the green body part according to the eleventh aspect A11, wherein the epoxy monomers comprise at least one of 3,4-epoxycyclohexylmethyl 3,4-epoxycyclohexanecarboxylate; diglycidyl 1,2-cyclohexanedicarboxylate; 1, 2, 7, 8-diepoxyoctane; dicyclopentadiene dioxide; 1,2-butanediol diglycidyl ether; and 1,2-epoxy dodecane.

A thirteenth aspect A13 includes the green body part according to the eleventh aspect A11, wherein the acrylate monomers comprise at least one of cyano acrylates, allyl cyano acryaltes, alkyl ayano acryaltes, neopentyl glycol propoxylate (1PH/OH) diacrylate, di(ethylene glycol) diacrylate, 1,6-hexanediol diacrylate, and tri(propylene glycol) diacrylate.

A fourteenth aspect A14 includes the green body part according to the eleventh aspect A11, wherein the vinyl ether monomers comprise at least one of cyclohexyl vinyl ether, and diethylene glycol divinyl ether.

A fifteenth aspect A15 includes the green body part according to any one of the fourth through fourteenth aspects A4-A14, wherein the joint material further comprises greater than or equal to 0.01 wt% and less than or equal to 2 wt% of a thermal initiator, the thermal initiator comprising at least one of a blocked ammonium antimony hexafluoride catalyst; 1,1'-azobis(cyclohexanecarbonitrile); 2,2'-azobis(2-methylpropionitrile); (4-hydroxyphenyl)methyl(2-methylbenzyl)sulfonium hexafluoroantimonate; and benzyl(4-hydroxyphenyl)methylsulfonium hexafluoroantimonate.

A sixteenth aspect A16 includes the green body part according to any one of the first through fifteenth aspects A1-A15, wherein the interfacial joint has at least one curved portion.

A seventeenth aspect A17 includes the green body part according to any one of the first through sixteenth aspects A1-A16, wherein the powder comprises a same element as at least one of the first particulate material and a second particulate material.

An eighteenth aspect A18 includes the green body part according to any one of the first through seventeenth aspects A1-A17, wherein at least one of the first particulate material and the second particulate material comprises a metal particulate material, the metal particulate material comprising at least one of a nickel alloy, a cobalt alloy, a cobalt-chromium alloy, a titanium alloy, an aluminum-based alloy, a tungsten alloy, a stainless steel alloy, low carbon steel, and copper.

An nineteenth aspect A19 includes the green body part according to any one of the first through seventeenth aspects A1-A17, wherein at least one of the first particulate material and the second particulate material comprises at least one of a ceramic material, the ceramic material comprising alumina, aluminum nitride, zirconia, titania, silica, silicon nitride, silicon carbide, and boron nitride.

According to a twentieth aspect A20, a method of manufacturing a joined part may comprise: providing a first green portion comprising a first plurality of layers of a first particulate material and a second green portion comprising a second plurality of layers of a second particulate material; applying a joint material on a face of the first green portion, the joint material comprising a powder having a particle size distribution greater than or equal to 1 µm and less than or equal to 50 µm; and contacting the second green portion to the joint material on the face of the first green portion to form a joined green body part having an interfacial joint between the first green portion and the second green portion.

A twenty-first aspect A21 includes the green body part according to the twentieth aspect A20, wherein the powder comprises a metallic powder, the metallic powder comprising at least one of nickel alloy, stainless steel alloy, cobalt-chromium alloy, aluminum alloy, iron alloy, titanium alloy, copper alloy, and copper nickel alloy.

A twenty-second aspect A22 includes the green body part according to the twentieth aspect A20 or the twenty-first aspect A21, wherein the joint material further comprises a binder, the binder comprising a plurality of reactive monomers.

A twenty-third aspect A23 includes the green body part according to the any one of the twentieth through twenty-second aspects A20-A22, wherein the method further comprises heating the joined green body part at a temperature greater than or equal to 65 °C and less than or equal to 140 °C to cure the joint material.

A twenty-fourth aspect A24 includes the green body part according to the twentieth through twenty-third aspects A20-A23, wherein the method comprises: heating the joined green body part above a first temperature to remove at least a portion of the binder and sinter at least a portion of the powder such that the sintered powder forms necked regions between the first particulate material and second particulate material, thereby forming a joined brown body part; and heating the joined brown body part above a second temperature to sinter the first particulate material and second particulate material, thereby forming a joined consolidated part.

Additional features and advantages of the aspects disclosed herein will be set forth in the detailed description, which follows, and in part will be readily apparent to those skilled in the art from that description or recognized by practicing the disclosed aspects as described herein, including the detailed description which follows, the claims, as well as the appended drawings.

It is to be understood that both the foregoing general description and the following detailed description describe various aspects and are intended to provide an overview or framework for understanding the nature and character of the claimed subject matter. The accompanying drawings are included to provide a further understanding of the various aspects, and are incorporated into and constitute a part of this specification. The drawings illustrate the various aspects described herein, and together with the description serve to explain the principles and operations of the claimed subject matter.

### BRIEF DESCRIPTION OF THE DRAWINGS

FIG. 1 is a schematic view of a first green portion and a second green portion according to one or more aspects shown and described herein;
FIG. 2 is an enlarged view of the first green portion and the second green portion of FIG. 1;
FIG. 3 is a schematic view of a joined green body part joined via a sinter joining process;
FIG. 4 is a schematic view of a joined green body part according to one or more aspects shown and described herein;
FIG. 5 is a flow diagram of an aspect of a method of manufacturing a part using a joint material according to one or more aspects shown and described herein;
FIG. 6 is a block diagram of an additive manufacturing apparatus according to one or more aspects shown and described herein;
FIG. 7 is a schematic view of a layer of particulate material from which a green portion is manufactured according to one or more aspects shown and described herein;
FIG. 8 is a schematic view of a green potion according to one or more aspects shown and described herein;
FIG. 9 is a schematic view of a green portion with a joint material applied thereto according to one or more aspects shown and described herein;
FIG. 10 is a schematic view of a joined green body part according to one or more aspects shown and described herein;
FIG. 11 is a schematic view of another aspect of a joined green body part according to one or more aspects shown and described herein;
FIG. 12 is a schematic view of another aspect of a joined green body part according to one or more aspects shown and described herein;
FIG. 13 is a schematic view of another aspect of a joined green body part according to one or more aspects shown and described herein;
FIG. 14 is a schematic view of another aspect of a joined green body part according to one or more aspects shown and described herein;
FIG. 15 is a schematic view of another aspect of a joined green body part according to one or more aspects shown and described herein;
FIG. 16 is a schematic view of another aspect of a joined green body part according to one or more aspects shown and described herein;
FIG. 17 is a schematic view of another aspect of a joined green body part according to one or more aspects shown and described herein;
FIG. 18 is a schematic view of a joined green body part according to one or more aspects shown and described herein;
FIG. 19 is a schematic view of is a schematic view of joined brown body part according to one or more aspects shown and described herein;
FIG. 20 is a schematic view of a joined consolidated part according to one or more aspects shown and described herein;
FIG. 21 is a photograph of a first green portion according to one or more aspects shown and described herein;
FIG. 22 is a photograph of a control green body part with a first green portion placed on top of a second green portion;
FIG. 23 is a microscopic image of a control joined part;
FIG. 24 is a microscopic image of an example joined part according to one or more aspects shown and described herein;
FIG. 25 is an enlarged microscopic image of the example joined part of FIG. 24;
FIG. 26 is a microscopic image of an example joined part according to one or more aspects shown and described herein;
FIG. 27 is an enlarged microscopic image of the example joined part of FIG. 26;
FIG. 28 is an enlarged microscopic image of a control joined part;
FIG. 29 is an enlarged microscopic image of an example joined part according to one or more aspects shown and described herein;
FIG. 30 is an enlarged microscopic image of another example joined part according to one or more aspects shown and described herein;
FIG. 31 is a schematic view of a control joined part according to one or more aspects of the disclosure shown and described herein;
FIG. 32 is a photograph of a control joined part after being subjected to a 3-point beam bending experiment;
FIG. 33 is a schematic view of an example joined part according to one or more aspects shown and described herein; and
FIG. 34 is a photograph of an example joined part after being subjected to a 3-point beam bending experiment according to one or more aspects shown and described herein.

### DETAILED DESCRIPTION

Reference will now be made in detail to various aspects of joint material containing additively manufactured parts. In particular, various aspects of green body parts comprise a first green portion comprising a first plurality of layers of a first particulate material, a second green portion comprising a second plurality of layers of a second particulate material, an interfacial or interfacing joint between the first green portion and the second green portion, and a joint material disposed within the interfacial joint, the joint material comprising a powder having a particle size distribution greater than or equal to 1 µm and less than or equal to 50 µm. Various aspects of green body parts will be referred to herein with specific reference to the appended drawings.

Ranges may be expressed herein as from "about" one particular value, or to "about" another particular value. When such a range is expressed, another aspect includes from the one particular value or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of aspects described in the specification.

As used herein, the singular forms "a," "an" and "the" include plural referents unless the context clearly dictates otherwise. Thus, for example, reference to "a" component includes aspects having two or more such components, unless the context clearly indicates otherwise.

The term "particle size distribution," as used herein, refers to the particle size distribution D50 or the median diameter of the particle size distribution.

The phrase "green portion," and "joined green body part" as used herein, refers to a portion or a part prior to undergoing heat treatment to remove the print binder.

The phrase "joined brown body part," as used herein, refers to a part that has undergone a debinding heat treatment to remove at least a portion of the print binder.

The term "debinding," as used herein, refers to heating the joined green body part to remove at least portion of the print binder to form a joined brown body part.

The phrase "thermoplastic polymer," as used herein, refers to a polymer having one or more polymer strands having functional groups that may interact with one another via weak non-covalent forces (e.g., interactions, bonds) to link, or otherwise couple, strands of each respective thermoplastic polymer to one another.

The phrase "thermoset polymer," as used herein, refers to a crosslinked polymer network.

The phrase "weak non-covalent forces," as used herein, refers to hydrogen bonding, ionic bonding, Van der Waals forces, and the like having a bond or force strength greater than or equal to 1 kcal/mol and less than or equal to 7 kcal/mol.

The phrase "thermal initiator," as used herein, refers to a compound that creates reactive species (i.e., free radicals, cations, or anions) upon exposure to heat.

The microscopic images include non-limiting example aspects of the disclosure, and were collected using a Zeiss Optical microscope at a magnification of 100x.

Binder jet printing may be limited by the complex structure of the part to be printed or the size of the printer. To form parts having a relatively complex shape or large size, additive manufactures may binder jet print two or more parts and utilize joining processes, such as sinter joining.

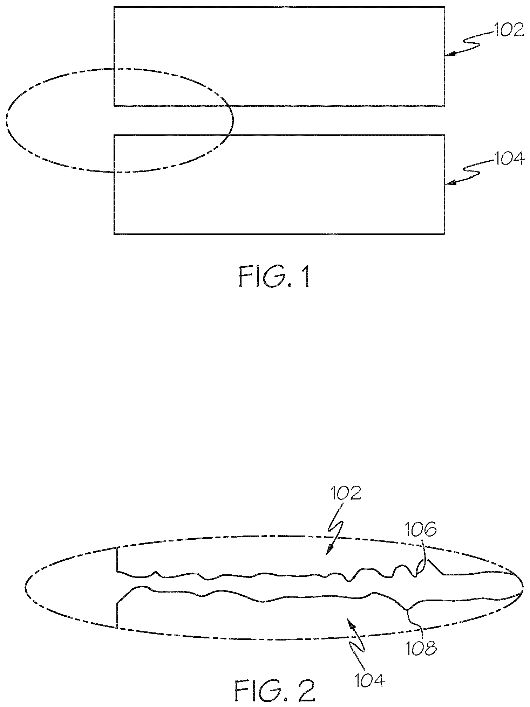

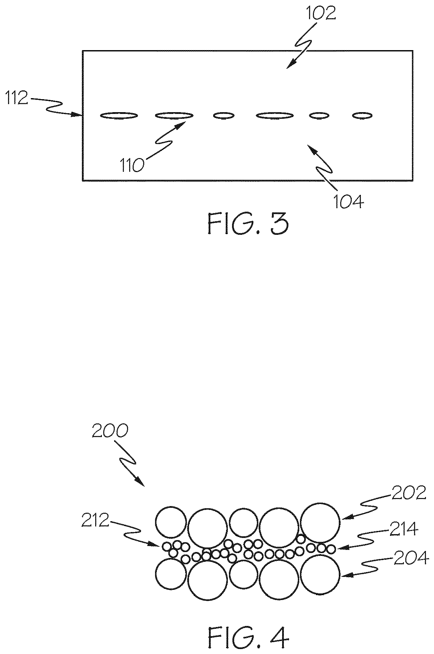

Referring now to FIGS. 1 and 2, a first green portion 102 and a second green portion 104 obtained via conventional binder jetting have uneven surfaces including peaks 106 and valleys 108. Accordingly, when green portions 102 and 104 are joined via a sinter joining process as shown in FIG. 3, voids 110 exist at the interfacial j oint 112. This porosity at the interfacial j oint 112 reduces the joint strength and overall strength of the part and may lead to mechanical failure or joint failure.

As set forth above and referring to FIG. 4, the green body parts 200 described herein comprise a first green portion 202, a second green portion 204, an interfacial joint 212 between the first green portion 202 and the second green portion 204, and a joint material 214 disposed within the interfacial joint 212. The joint material 214 includes a powder having a relatively small particle size distribution as compared to the particulate material of the first and second green portions 202, 204 such that the peaks and valleys at the interfacial joint 212 are filled and to form a seamless joint, thereby improving the joint strength and overall strength of the part. As used herein, the term "relatively small particle size distribution" denotes a particle size distribution less than or equal to 50 µm.

In aspects, the powder of joint material may have a particle size distribution greater than or equal to 1 µm and less than or equal to 50 µm such that the powder fills the uneven surface of the green portions to produce a part having a seamless joint (i.e., limited or no voids). In aspects, the powder may have a particle size distribution greater than or equal to 1 µm, greater than or equal to 5 µm, greater than or equal to 10 µm, or even greater than or equal to 15 µm. In aspects, the powder may have a particle size distribution less than or equal to 50 µm, less than or equal to 25 µm, or even less than or equal to 20 µm. In aspects, the powder may have a particle size distribution greater than or equal to 1 µm and less than or equal to 50 µm, greater than or equal to 1 µm and less than or equal to 25 µm, greater than or equal to 1 µm and less than or equal to 20 µm, greater than or equal to 5 µm and less than or equal to 50 µm, greater than or equal to 5 µm and less than or equal to 25 µm, greater than or equal to 5 µm and less than or equal to 20 µm, greater than or equal to 10 µm and less than or equal to 50 µm, greater than or equal to 10 µm and less than or equal to 25 µm, greater than or equal to 10 µm and less than or equal to 20 µm, greater than or equal to 15 µm and less than or equal to 50 µm, greater than or equal to 15 µm and less than or equal to 25 µm, or even greater than or equal to 15 µm and less than or equal to 20 µm, or any and all sub-ranges formed from any of these endpoints.

In aspects, the powder of the joint material may comprise a metallic powder. In aspects, the metallic powder may comprise at least one of nickel alloy (e.g., Inconel 625, Rene' 108, Rene' 80), stainless steel alloy (e.g., 316L, 17-4PH), cobalt-chromium alloy, aluminum alloy (e.g., A16061), iron alloy, titanium alloy (e.g., Ti64), copper alloy, and copper nickel alloy (e.g., C18000). In other aspects, the powder of the joint material may comprise a ceramic powder. In aspects, the ceramic powder may comprise at least one of alumina, aluminum nitride, zirconia, titania, silica, silicon nitride, silicone carbide, and boron nitride.

In aspects, joint material may further comprise a binder to help improve the strength of the joined green body part. In aspects, the binder may comprise a plurality of reactive monomers. The thermoplastic or thermoset polymer that is formed through polymerization of the reactive monomers imparts strength to the joined green body part by binding the green portions. In aspects, the formed thermoplastic polymer is selected from a class of thermoplastic polymers that generally decompose into small oligomers, carbon dioxide, and water without requiring the presence of oxygen. Accordingly, in aspects, the resulting thermoplastic polymer may be cleanly and readily removed during curing of the joint material. In aspects, where a thermoplastic polymer is desired, the plurality of reactive monomers may comprise a monofunctional monomer. In aspects where clean burning is not required and char may be present, the plurality of reactive monomers may comprise difunctional monomers to produce a thermoset polymer.

In aspects, the plurality of reactive monomers may comprise at least one of epoxy monomers, acrylate monomers, and vinyl ether monomers.

In aspects, the epoxy monomers may comprise at least one of 3,4-epoxycyclohexylmethyl 3,4-epoxycyclohexanecarboxylate; diglycidyl 1,2-cyclohexanedicarboxylate; 1, 2, 7, 8-diepoxyoctane (e.g., 1, 2, 7, 8-diepoxyoctane 97%); dicyclopentadiene dioxide (e.g., mixture of endo and exo isomers 97%); 1,2-butanediol diglycidyl ether (e.g., 1,4-Butanediol diglycidyl ether technical grade, 60% or ≥95%); and 1,2-epoxydodecane (e.g., 1,2-Epoxydodecane 90%).

In aspects, the acrylate monomers may comprise at least one of cyano acrylates (e.g., Permabond 919, Permabond 922), allyl cyano acryaltes, alkyl ayano acryaltes, neopentyl glycol propoxylate (1PH/OH) diacrylate, di(ethylene glycol) diacrylate, 1,6-hexanediol diacrylate, and tri(propylene glycol) diacrylate. In aspects, the acrylate monomers may not require an initiator for curing as the acrylate monomers may crosslink by moisture catalyzed crosslinked due to moisture present on the interfacial joining surface.

In aspects, the vinyl ether monomers may comprise at least one of cyclohexyl vinyl ether, and diethylene glycol divinyl ether.

In aspects, the binder may further comprise a thickening agent. In aspects in which the plurality of reactive monomers comprise monofunctional monomers, the binder may comprise a thickening argent to increase the viscosity thereof. In aspects, the thickening agent may comprise at least one of polystyrene, polycarbonate, and polyvinylpyrrolidone. In aspects, the thickening agent may have a molecular weight greater than or equal to 10,000 g/mol and less than or equal to 50,000 g/mol.

In aspects, a weight ratio of the powder to the binder in the joint material is from 3:1 to 8:1, from 3.5:1 to 8:1, from 4:1 to 8:1, from 3:1 to 7:1, from 3.5:1 to 7:1, from 4:1 to 7:1, 3:1 to 6:1, from 3.5:1 to 6:1, or even from 4:1 to 6:1, or any and all sub-ranges formed from any of these endpoints.

In aspects, the joint material may comprise greater than or equal to 75 weight percent (wt%) and less than or equal to 88 wt% of the powder and 12 wt% to 25 wt% of the binder. In aspects, the joint material may comprise greater than or equal to 75 wt% and less than or equal to 88 wt%, greater than or equal to 75 wt% and less than or equal to 86 wt%, greater than or equal to 75 wt% and less than or equal to 84 wt%, greater than or equal to 77 wt% and less than or equal to 88 wt%, greater than or equal to 77 wt% and less than or equal to 86 wt%, greater than or equal to 77 wt% and less than or equal to 84 wt%, greater than or equal to 80 wt% and less than or equal to 88 wt%, greater than or equal to 80 wt% and less than or equal to 86 wt%, or even greater than or equal to 80 wt% and less than or equal to 84 wt%, or any and all sub-ranges formed from any of these endpoints, of the powder; and greater than or equal to 12 wt% and less than or equal to 25 wt%, greater than or equal to 12 wt% and less than or equal to 23 wt%, greater than or equal to 12 wt% and less than or equal to 20 wt%, greater than or equal to 14 wt% and less than or equal to 25 wt%, greater than or equal to 14 wt% and less than or equal to 23 wt%, greater than or equal to 14 wt% and less than or equal to 20 wt%, greater than or equal to 16 wt% and less than or equal to 25 wt%, greater than or equal to 16 wt% and less than or equal to 23 wt%, or even greater than or equal to 16 wt% and less than or equal to 20 wt%, or any and all sub-ranges formed from any of these endpoints, of the binder.

In aspects, the joint material may have a viscosity greater than or equal to 100 centipoise (cP) to and less than or equal to 50,000 cP. In aspects, the joint material may have a viscosity greater than or equal to 100 cP, greater than or equal to 200 cP, greater than or equal to 500 cP, or even greater than or equal to 1000 cP. In aspects, the joint material may have a viscosity less than or equal to 50,000 cP, less than or equal to 10,000 cP, less than or equal to 2,000 cP, or even less than or equal to 1,000 cP. In aspects, the joint material may have a viscosity greater than or equal to 100 cP to and less than or equal to 50,000 cP, greater than or equal to 100 cP to and less than or equal to 10,000 cP, greater than or equal to 100 cP to and less than or equal to 2,000 cP, greater than or equal to 100 cP to and less than or equal to 1,000 cP, greater than or equal to 200 cP to and less than or equal to 50,000 cP, greater than or equal to 200 cP to and less than or equal to 10,000 cP, greater than or equal to 200 cP to and less than or equal to 2,000 cP, greater than or equal to 200 cP to and less than or equal to 1,000 cP, greater than or equal to 500 cP to and less than or equal to 50,000 cP, greater than or equal to 500 cP to and less than or equal to 10,000 cP, greater than or equal to 500 cP to and less than or equal to 2,000 cP, greater than or equal to 500 cP to and less than or equal to 1,000 cP, greater than or equal to 1,000 cP to and less than or equal to 50,000 cP, greater than or equal to 1,000 cP to and less than or equal to 10,000 cP, or even greater than or equal to 1,000 cP to and less than or equal to 2,000 cP, or any and all sub-ranges formed from any of these endpoints.

The viscosity of the joint material may be adjusted depending on how the joint material is being applied to the green portion. For example, in aspects where a dip-coating process is used to apply the j oint material, the join material may have a viscosity greater than or equal to 100 cP and less than or equal to 1,000 cP. In other aspects where the joint material is directly applied to a green portion, the joint material may have a viscosity greater than or equal to 1,000 cP and less than or equal to 2,000 cP.

In aspects, the joint material may further comprise a thermal initiator for initiating curing of the joint material. In aspects, the joint material may comprise greater than or equal to 0.01 wt% and less than or equal to 2 wt% of the thermal initiator. In aspects, the joint material may comprise greater than or equal to 0.1 wt%, greater than or equal to 0.2 wt%, greater than or equal to 0.3 wt%, greater than or equal to 0.4 wt%, or even greater than or equal to 0.5 wt% of the thermal initiator. In aspects, the joint material may comprise less than or equal to 2 wt%, less than or equal than or equal to 1.5 wt%, or even less than or equal to 1 wt% of the thermal initiator. In aspects, the joint material may comprise greater than or equal to 0.1 wt% and less than or equal to 2 wt%, greater than or equal to 0.1 wt% and less than or equal to 1.5 wt%, greater than or equal to 0.1 wt% and less than or equal to 1 wt%, greater than or equal to 0.2 wt% and less than or equal to 2 wt%, greater than or equal to 0.2 wt% and less than or equal to 1.5 wt%, greater than or equal to 0.2 wt% and less than or equal to 1 wt%, greater than or equal to 0.3 wt% and less than or equal to 2 wt%, greater than or equal to 0.3 wt% and less than or equal to 1.5 wt%, greater than or equal to 0.3 wt% and less than or equal to 1 wt%, greater than or equal to 0.4 wt% and less than or equal to 2 wt%, greater than or equal to 0.4 wt% and less than or equal to 1.5 wt%, greater than or equal to 0.4 wt% and less than or equal to 1 wt%, greater than or equal to 0.5 wt% and less than or equal to 2 wt%, greater than or equal to 0.5 wt% and less than or equal to 1.5 wt%, or even greater than or equal to 0.5 wt% and less than or equal to 1 wt%, or any and all sub-ranges formed from any of these endpoints, of the thermal initiator.

In aspects, the thermal initiator may comprise at least one of a blocked ammonium antimony hexafluoride catalyst (e.g., K-PURE CXC-1612); 1,1'-azobis(cyclohexanecarbonitrile) (ACHN); 2,2'-azobis(2-methylpropionitrile); (4-hydroxyphenyl)methyl(2-methylbenzyl)sulfonium hexafluoroantimonate; and benzyl(4-hydroxyphenyl)methylsulfonium hexafluoroantimonate.

In aspects, the thermal initiator may have a thermal decomposition temperature greater than or equal to 40 °C and less than or equal to 150 °C. In aspects, the thermal initiator has a thermal decomposition temperature greater than or equal to 65 °C and less than or equal to 100 °C. In aspects, the thermal decomposition temperature of the thermal initiator may be greater than or equal to 40 °C, greater than or equal to 50 °C, greater than or equal to 60 °C, or even greater than or equal to 65 °C. In aspects, the thermal decomposition temperature of the thermal initiator may be less than or equal to 150 °C, less than or equal to 125 °C, or even less than or equal to 100 °C. In aspects, the thermal decomposition temperature of the thermal initiator may be greater than or equal to 40 °C and less than or equal to 150 °C, greater than or equal to 40 °C and less than or equal to 125 °C, greater than or equal to 40 °C and less than or equal to 100 °C, greater than or equal to 50 °C and less than or equal to 150 °C, greater than or equal to 50 °C and less than or equal to 125 °C, greater than or equal to 50 °C and less than or equal to 100 °C, greater than or equal to 60 °C and less than or equal to 150 °C, greater than or equal to 60 °C and less than or equal to 125 °C, greater than or equal to 60 °C and less than or equal to 100 °C, greater than or equal to 65 °C and less than or equal to 150 °C, greater than or equal to 65 °C and less than or equal to 125 °C, or even greater than or equal to 65 °C and less than or equal to 100 °C, or any and all sub-ranges formed from these endpoints.

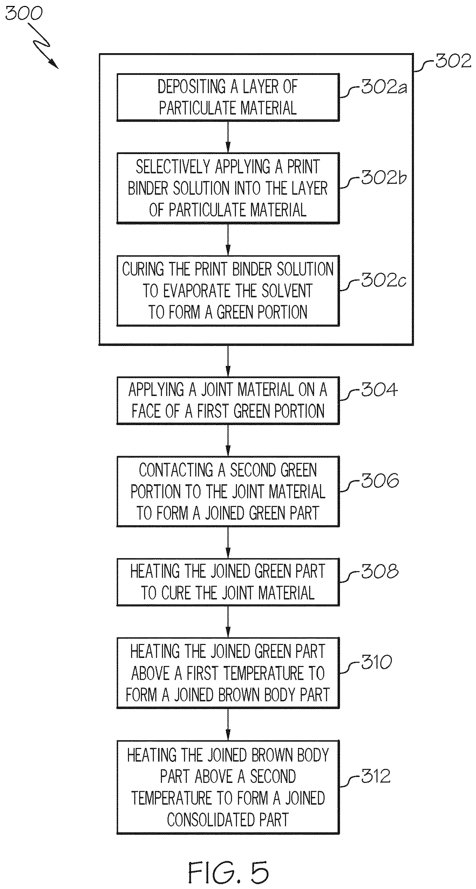

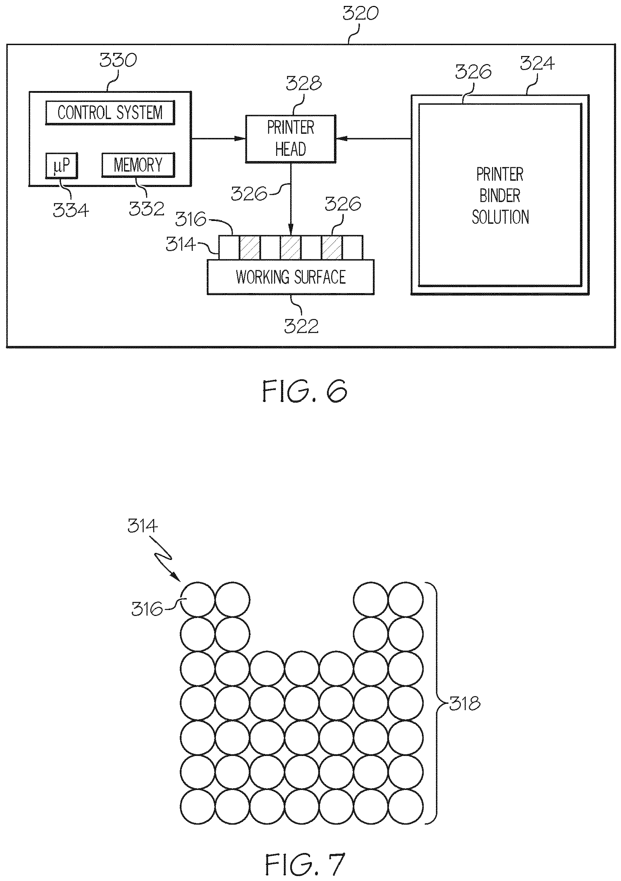

Referring now to FIG. 5, a method of manufacturing a joined part via additive manufacturing using the joint material according to aspects described herein is shown at 300. To facilitate discussion of aspects of the method 300, reference is also made to FIGS. 6 and 7, which includes a block diagram depicting an aspect of an additive manufacturing apparatus 320 that may be used to perform the method 300. The method begins at block 302 with providing a first green portion and a second green portion. The first and second green portion may be provided by any method known to one of ordinary skill in the art.

For example, the step 302 of providing a green portion may begin at block 302a with depositing a layer 314 of a particulate material 316 (i.e., a first particulate material or a second particulate material), as shown in FIG. 7, on a working surface. In aspects, the layer 314 may have a thickness 318 greater than or equal to 10 microns (µm) and less than or equal to 200 µm. The particulate material 316 used to print the part may vary depending on the type of part and the end use of the part. In aspects, a powder of the joint material may comprise a same element as at least one of the first particulate material and a second particulate material.

In particular, the particulate material 316 may include a metal particulate material, such as at least one of a nickel alloy (e.g., Inconel 625, Inconel 718, Rene'108, Rene'80, Rene'142, Rene'195, and Rene'M2, Marm-247), a cobalt alloy (e.g., Hans 188, L605, X40, X45, and FSX414), a cobalt-chromium alloy, a titanium alloy, an aluminum alloy, a tungsten alloy, a stainless steel alloy (e.g., SS316L, SS304, Alloy Steel 8620, Alloy Steel 4140, Alloy 17-4PH, Stainless Steel 300 Series, Stainless Steel 400 Series), a low carbon steel (i.e., steel having a carbon content from 0.05% to 0.3%), and copper. In aspects, the metal particulate material may comprise particles having a particle size distribution greater than or equal to 1 microns (µm) and less than or equal to 75 µm. Such particulate materials may be used to print metal articles including, by way of example and not limitation, fuel tips, fuel nozzles, shrouds, micro mixers, or turbine blades.

In aspects, the particulate material 316 may include a ceramic particulate material, such as at least one of alumina, aluminum nitride, zirconia, titania, silica, silicon nitride, silicon carbide, and boron nitride. In aspects, the ceramic particulate material may comprise particles having a particle size distribution greater than or equal to 0.1 µm to less than and equal to 100 µm. Such particulate materials may be used to print ceramic articles for use in, by way of example and not limitation, the medical and transportation industries.

Referring back to FIG. 5 at block 302b, following the deposition of the particulate material 316, the step 302 continues with selectively depositing a print binder into a portion of the layer 314 according to a pattern. For example, the print binder may be selectively printed into the layer 314 of particulate material 316 using a print head that is operated by a controller based on a CAD design that includes a representation of a layer of the consolidated part being printed.

For example, as shown in FIG. 6, the additive manufacturing apparatus 320 may be a binder jet printer that selectively deposits the binder into the layer 314 according to the acts of block 302b (FIG. 5). In aspects, the additive manufacturing apparatus 320 may include a working surface 322 that supports the layer 314 of particulate material 316, a reservoir 324 that stores a print binder 326, and a printer head 328 that is fluidly coupled to the reservoir 324. The printer head 328 selectively deposits the print binder 326 into the layer 314 of particulate material 316 to print the print binder 326 onto and into the layer 314 in a pattern that is representative of a layer of the consolidated part being printed. In aspects, the additive manufacturing apparatus 320 may include a control system 330 for controlling operation of the additive manufacturing apparatus 320. The control system 330 may include a distributed control system (DCS) or any computer-based workstation that is fully or partially automated. In aspects, the control system 330 may be any suitable device employing a general purpose computer or an application-specific device, which may generally include memory circuitry 332 storing one or more instructions for controlling operation of the additive manufacturing apparatus 320 and a processor. The memory circuitry 332 may store CAD designs representative of a structure of the consolidated part being printed. The processor may include one or more processing devices (e.g., microprocessor 334), and the memory circuitry 332 may include one or more tangible, non-transitory, machine-readable media collectively storing instructions executable by the processer to control actions described herein.

After deposition, the print binder 326 at least partially coats an outer surface of the particulate material 316, thereby generating binder-coated particles.

The step 302 may repeat the acts of blocks 302a and 302b to continue building up the part in a layer-by-layer manner until a desired number of layers 314 (i.e., a first plurality of layers or a second plurality of layers) have been printed.

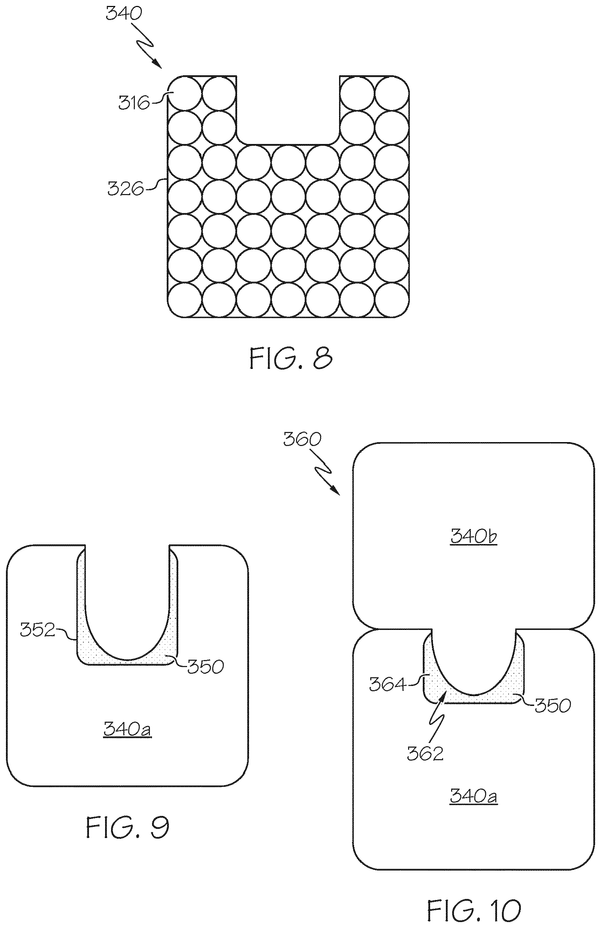

As shown in FIG. 8, following deposition of the layer 314 and printing of the print binder 326 as set forth in blocks 302a and 302b of FIG. 5, the method 300 continues at block 302c with curing the print binder 326 to form a green portion 340 (i.e., a first green portion 340a or a second green portion 340b). For example, the print binder 326 may include a solvent. While a portion of the solvent in the print binder 326 may be evaporated during deposition (e.g., printing) of the print binder 326, a certain amount of the solvent may remain within the layer 314 of the particulate material 316. Therefore, in aspects, the print binder 326 may be thermally cured at a temperature that is suitable for evaporating the solvent remaining in the printed layer 314 and allowing efficient bonding of the printed layers 314, thereby forming the green portion 340.

Heat may be applied to the printed part using an IR lamp or heated plate (e.g., on-machine), or may be carried out by placing the printed part in an oven (e.g., off-machine). In aspects, curing the print binder 326 on-machine comprises heating the printed layers 314 at a temperature greater than or equal to 25 °C and less than or equal to 100 °C, greater than or equal to 30 °C and less than or equal to 90 °C, greater than or equal to 35 °C and less than or equal to 80 °C, or even greater than or equal to 40 °C and less than or equal to 70 °C, or any and all sub-ranges formed from any of these endpoints. In aspects, temperature ranges for heating the printed layer 314 on-machine may differ from off-machine temperature ranges.

Unbound particles from the particulate material layer (e.g., the particulate material 316 that is not bonded by the print binder 326) may be removed after curing to prepare the green portion 340 for post-printing steps, such as dipping, curing, debinding, and sintering.

After curing, the green portion 340 may undergo an optional drying step (not shown) to remove any residual solvent or other volatile materials that may remain in the green portion 340. For example, the green portion 340 may be dried in a vacuum, under an inert atmosphere (e.g., nitrogen (N₂), or argon (Ar)) or in air at slightly elevated or room temperatures.

Although one particular aspect of an additive manufacturing apparatus 320 has been described herein, it is contemplated that the joint material described herein can be used in conjunction with other additive manufacturing devices. Accordingly, the aspects described herein are not necessarily limited to the method of making a green portion described herein.

With reference to FIGS. 5 and 9-10, following providing a first green portion 340a and a second green portion 340b, the method 300 continues at block 304 with applying a joint material 350 on a face 352 of the first green portion 340a. The joint material 350 The face 352 of the first green portion 340a may be dipped or covered with the joint material 350 using any method known to one of ordinary skill in the art. The joint material 350 may be the joint material according to one or more aspects described herein.

The method 300 of FIG. 5 continues at block 306 with contacting the second green portion 340b to the joint material 350 on the face 352 of the first green portion 340a to form a joined green body part 360 having an interfacial joint 362 between the first green portion 340a and the second green portion 340b, as shown in FIG. 10. As described herein, the joint material 350 includes a powder having a relatively small particle size distribution (e.g., greater than or equal to 1 µm and less than or equal to 50 µm) such that the peaks and valleys at the interfacial joint 362 are filled and to form a seamless joint, thereby improving the joint strength and overall strength of the part.

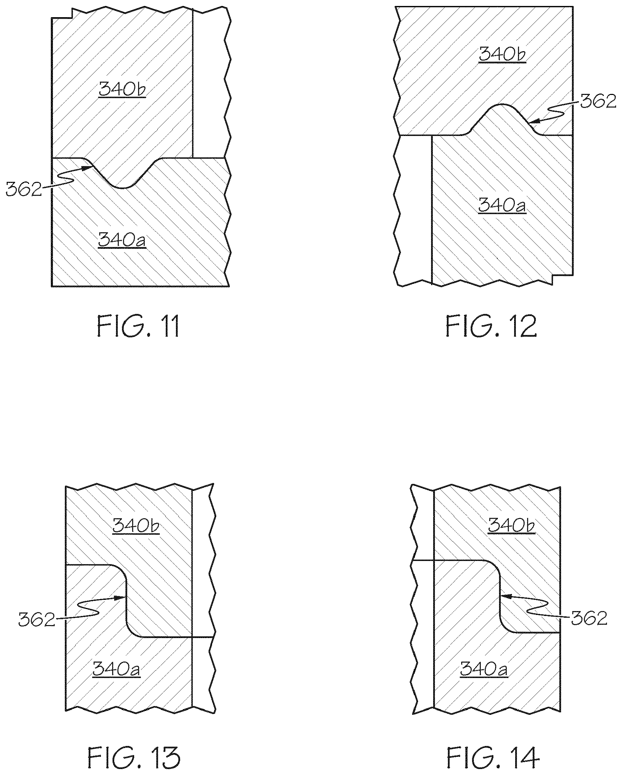

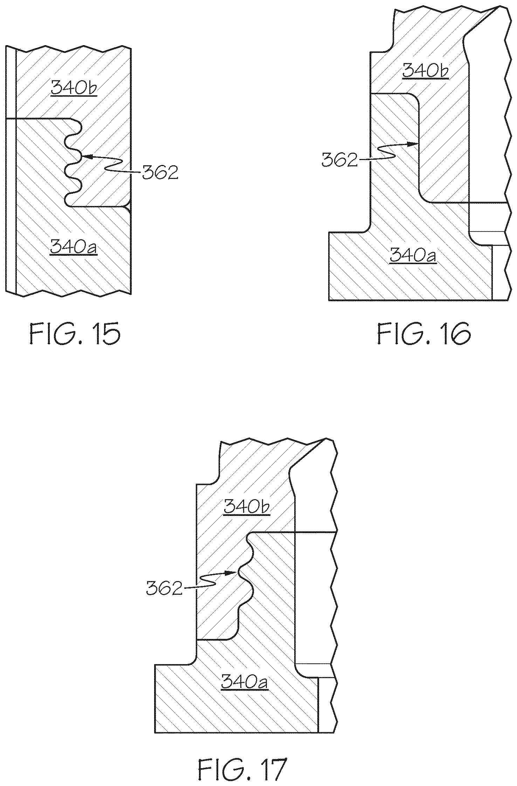

As shown in FIG. 10, the interfacial joint 362 may have at least one curved portion 364. The at least one curved portion 364 may allow for self-alignment of the first green portion 340a and the second green portion 340b. The at least one curved portion 364 may also prevent crack propagation and control the flow of the joint material within the interfacial joint 362. Referring now to FIGS. 11-17, additional aspects of interfacial joints 362 having at least one example curved portion are shown. In other aspects, the interface joint may be angled relative to a normal of the joined green body part.

The method 300 of FIG. 5 continues at block 308 with heating the joined green body part at a temperature to cure the joint material. During curing, any solvent present in the joint material may be evaporated and any monomers present in the joint material may be crosslinked, thereby imparting strength to the joined green body part.

In aspects, heat is applied to the joined green body part 360 using an IR lamp or heated plate (e.g., on-machine), or curing may be carried out by placing the joined green body part 360 in an oven (e.g., off-machine). In aspects, to cure the joint material, the joined green body part may be heated at a temperature greater than or equal to 65 °C and less than or equal to 140 °C, greater than or equal to 65 °C and less than or equal to 125 °C, greater than or equal to 65 °C and less than or equal to 110 °C, greater than or equal to 80 °C and less than or equal to 140 °C, greater than or equal to 80 °C and less than or equal to 125 °C, or even greater than or equal to 80 °C and less than or equal to 110 °C, or any and all sub-ranges formed from any of these endpoints.

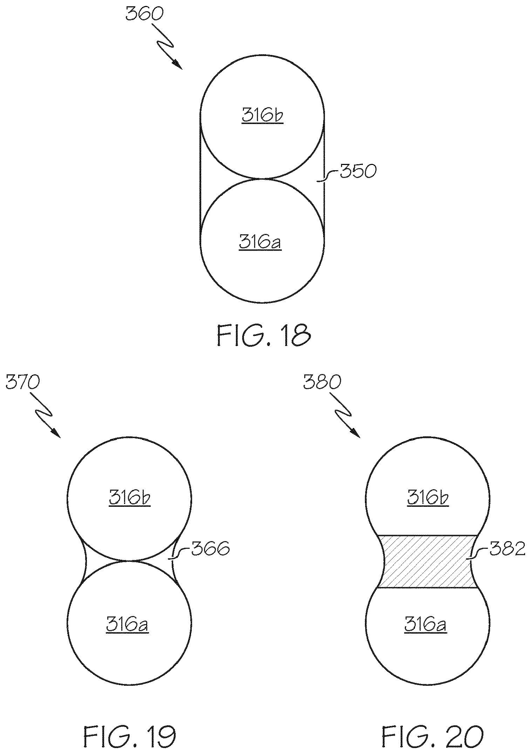

The method 300 of FIG. 5 continues at block 310 with heating the joined green body part 360 as shown in FIG. 18 above a first temperature to sinter at least a portion of the powder of the joint material 350 such that the sintered powder forms necked regions 366 between the first particulate material 316a and the second particulate material 316b, thereby forming a joined brown body part 370 as shown in FIG. 19. The necked region 366 bridges the first particulate material 316a and the second particulate material 316b, thereby increasing the brown strength of the joined brown body part 370 prior to consolidation (i.e., sintering) of the particulate material 316a, 316b. During heating above a first temperature, at least a portion of binder present in the first particulate material 316a, the second particulate material 316b, or joint material 350 is removed (i.e., debinding).

In aspects, the first temperature is greater than or equal to 60 °C and less than or equal to 700 °C, greater than or equal to 70 °C and less than or equal to 600 °C, greater than or equal to 75 °C and less than or equal to 500 °C, or even greater than or equal to 80 °C and less than or equal to 400 °C, or any and all sub-ranges formed from any of these endpoints.

In aspects, heating the joined green body part 360 above a first temperature may include heating the joined green body part in an oxygen-free environment (e.g., in a vacuum chamber/under inert atmosphere) or in air.

The method 300 of FIG. 5 concludes at block 312 with heating the joined brown body part 370 above a second temperature to sinter the first particulate material 316a and the second particular material 316, thereby forming a joined consolidated part 380. In aspects, the second temperature is greater than or equal to the temperature at which the first particulate material 316a and the second particulate material 316b sinters. As such, by heating the joined brown body part 370 above a second temperature, the particulate material 316a, 316b sinters with the necked regions 366 (FIG. 19), thereby forming a sintered phase 382 of sintered particulate material 316a, 316b and sintered powder of the joint material 350, as shown in FIG. 20.

In aspects, the second temperature is greater than or equal to 75 °C and less than or equal to 1500 °C, greater than or equal to 75 °C and less than or equal to 1450 °C, greater than or equal to 75 °C and less than or equal to 1400 °C, greater than or equal to 100 °C and less than or equal to 1500 °C, greater than or equal to 100 °C and less than or equal to 1450 °C, greater than or equal to 100 °C and less than or equal to 1400 °C, greater than or equal to 200 °C and less than or equal to 1500 °C, greater than or equal to 200 °C and less than or equal to 1450 °C, greater than or equal to 200 °C and less than or equal to 1400 °C, greater than or equal to 300 °C and less than or equal to 1500 °C, greater than or equal to 300 °C and less than or equal to 1450 °C, greater than or equal to 300 °C and less than or equal to 1400 °C, greater than or equal to 400 °C and less than or equal to 1500 °C, greater than or equal to 400 °C and less than or equal to 1450 °C, or even greater than or equal to 400 °C and less than or equal to 1400 °C, or any and all sub-ranges formed from any of these endpoints.

In aspects, heating the joined brown body part 370 above a second temperature may include heating the joined brown body part in an oxygen-free environment (e.g., in a vacuum chamber/ inert atmosphere).

In aspects, at least two of blocks 308, 310, and 312 may occur in a single step (e.g., place joined green part in an oven).

Although various aspects described herein are described with reference to method 300, it should be understood that aspects of the joint described herein may be used with a variety of methods that are known and used by those skilled in the art. In particular, forming a green portion part may be accomplished in a number of different ways, in a number of different steps, and in a number of different locations.

### Examples

Aspects will be further clarified by the following examples. It should be understood that these examples are not limiting to the aspects described above.

### Joint Material Examples

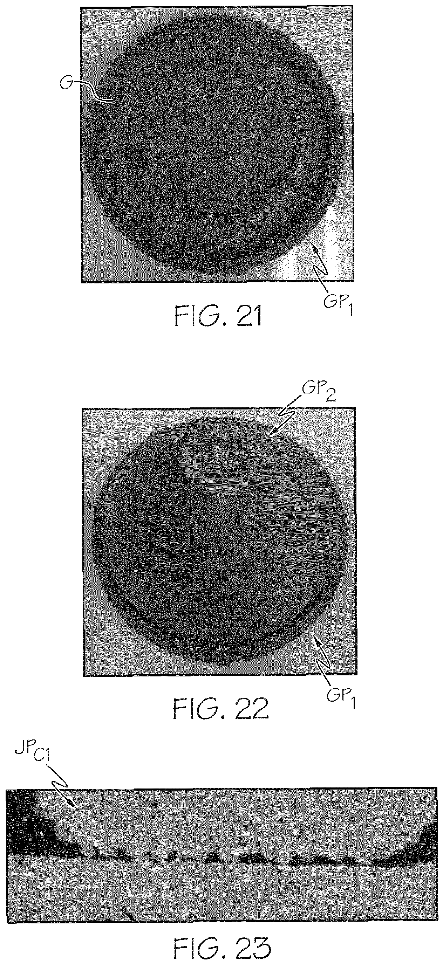

*Control Joined Part JP_{C1}*: Referring now to FIGS. 21 and 22, second green portion GP₂, formed of 316L stainless steel, was placed on top of first green portion GPi, formed of 316L stainless steel. Referring now to FIG. 23, the assembled portions were heated in an oven at 1390 °C for 6 hours to produce control joined part JP_{C1}. As shown in FIG. 23, joining a first green portion and second green portion without the use of a joint material resulted in a broken and disjointed microstructure between the first and second green portion.

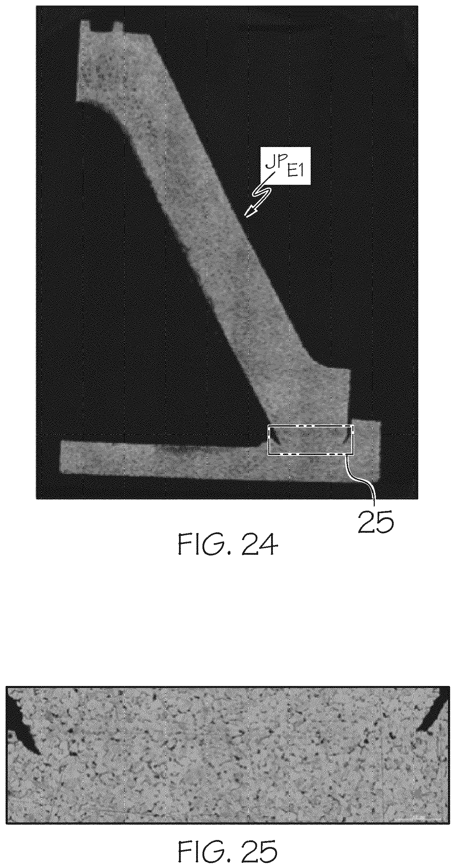

*Example Joined Parts JP_{E1} and JP_{E2}:* Referring now to FIGS. 24-27, example joined parts JP_{E1} and JP_{E2} were produced using a similar method as that used to produce control joined part JP_{C1}. However, referring back to FIG. 21, prior to placing the second green portion GP₂ on top of the first green portion GPi, 0.5 g of 316L stainless steel powder having a particle size distribution of approximately 25 µm was applied uniformly to a groove G in a first green portion GP_{1A}.

Referring now to Table 1, a microhardness evaluation was conducted using a Wilson VH3300 Automatic Hardness Tester at 5 points along the interfacial joint and the bulk material of example joined parts JP_{E1} and JP_{E2} and measured in Vickers scale using 500 g load force The joints of joined parts JP_{E1} and JP_{E2} had an average hardness of 76 and 72, respectively, which were similar to the average hardness of the bulk of joined parts JP_{E1} and JP_{E2}, respectively, which were 74 and 73, respectively. This similar hardness evidence that the joints of joined parts JP_{E1} and JP_{E2} had little or no porosity.

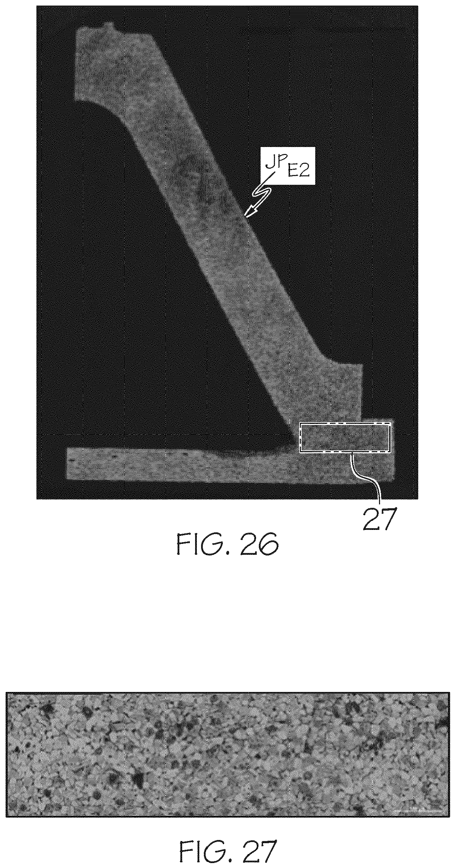

As shown in FIGS. 25 and 27 and as indicated by Table 1, using 316L stainless steel powder has a particle size distribution of approximately 25 µm as a joint material resulted in a seamless joint and clean microstructure between the first and second green portions.

**Table 1**

| | *J**P_{E1} Joint*** | ***JP_{E1} Bulk*** | ***JP_{E2} Joint*** | ***JP_{E2} Bulk*** |
|---|---|---|---|---|
| *Point 1* | 78 | 73 | 74 | 74 |
| *Point 2* | 72 | 71 | 71 | 70 |
| *Point 3* | 74 | 76 | 72 | 74 |
| *Point 4* | 79 | 74 | 72 | 76 |
| *Point 5* | 77 | 75 | 74 | 70 |
| *Average* | 76 | 74 | 72 | 73 |

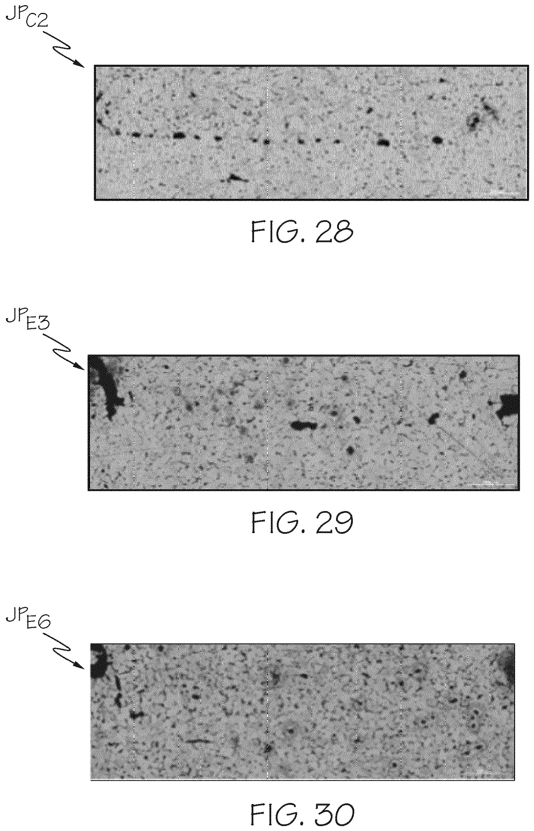

*Control Joined Part JP_{C2} and Example Joined Parts JP_{E3} to JP_{E8}:* Referring now to FIGS. 28-30, control joined part JP_{C2} and example joined parts JP_{E3} to JP_{E8} were produced using a similar method as that used to produce control joined part JP_{C1}. However, referring back to FIG. 21, prior to placing the second green portion GP₂ on top of the first green portion GPi, 6 g of a joint material comprising 316L stainless steel powder and Permabond 922 binder was applied uniformly to a groove G in a first green portion GP_{1A}. For control joined part JPC2, a 1.67: 1 weight ratio of 316L stainless steel powder to Permabond 922 binder was applied. For example joined parts JP_{E3}, JP_{E4}, and JP_{E5}, a 3.33:1 weight ratio of 316L stainless steel powder to Permabond 922 binder was applied. For example joined parts, JP_{E6}, JP_{E7}, and JP_{E8}, a 5:1 weight ratio of 316L stainless steel to Permabond 922 binder was applied.

As shown in FIG. 28, joining a first green portion and second green portion using a joint material lacking a sufficient ratio of powder to binder (i.e., from 3:1 to 8:1) resulted in a broken and disjointed microstructure between the first and second green portion.

Referring now to Table 2, a microhardness evaluation was conducted at 5 points along the interfacial joint and the bulk material of example joined parts JP_{E3} to JP_{E8}.

**Table 2**

| | ***JP_{E3} Joint*** | ***JP_{E3} Bulk*** | ***JP_{E4} Joint*** | ***JP_{E4} Bulk*** | ***JP_{E5} Joint*** | ***JP_{E5} Bulk*** |
|---|---|---|---|---|---|---|
| *Point 1* | 74 | 70 | 76 | 69 | 70 | 70 |
| *Point 2* | 74 | 74 | 75 | 73 | 77 | 71 |
| *Point 3* | 78 | 78 | 73 | 78 | 73 | 78 |
| *Point 4* | 74 | 74 | 70 | 72 | 77 | 78 |
| *Point 5* | 75 | 75 | 77 | 73 | 81 | 74 |
| *Average* | 75 | 74 | 74 | 74 | 76 | 74 |

| | ***JP_{E6} Joint*** | ***JP_{E6} Bulk*** | ***JP_{E7} Joint*** | ***JP_{E7} Bulk*** | ***JP_{E8} Joint*** | ***JP_{E8}** Bulk* |
|---|---|---|---|---|---|---|
| *Point 1* | 72 | 73 | 72 | 70 | 77 | 80 |
| *Point 2* | 73 | 74 | 73 | 78 | 70 | 76 |
| *Point 3* | 73 | 68 | 78 | 72 | 74 | 78 |
| *Point 4* | 69 | 74 | 72 | 75 | 73 | 72 |
| *Point 5* | 76 | 68 | 72 | 73 | 75 | 70 |
| *Average* | 73 | 71 | 73 | 74 | 74 | 75 |

As shown in FIGS. 29 and 30 and as indicated by Table 2, using a 3.33: 1 weight ratio and 5:1 weight ratio of 316L stainless steel and Permabond 922 binder as a joint material resulted in a seamless joint and clean microstructure between the first and second green portions.

*Example Joined Parts JP_{E9} to JP_{E11}*: Referring now to Table 3, a density evaluation was conducted by joining two single coupons using a joint material having the powder to binder weight ratios shown in Table 3 and subjecting the joined parts to an Archimedes density test. The single coupons had an Archimedes density of 98.23%. Joined Parts JP_{E9}, JP_{E10}, and JP_{E11} had an Archimedes density of 98.84%, 98.83%, and 98.86%, respectively. Accordingly, as indicated by Table 3, using a joint material as described herein to join parts results in a joint part having a similar density as a single part.

**Table 3**

| | ***Joint material powder to binder weight ratio* (%)** | ***Calculated density* (*%*)** |
|---|---|---|
| *JP_{E9}* | 1.67:1 | 98.84% |
| *JP_{E10}* | 3.33:1 | 98.83% |
| *JP_{E11}* | 5:1 | 98.86% |

### Joint Design Example

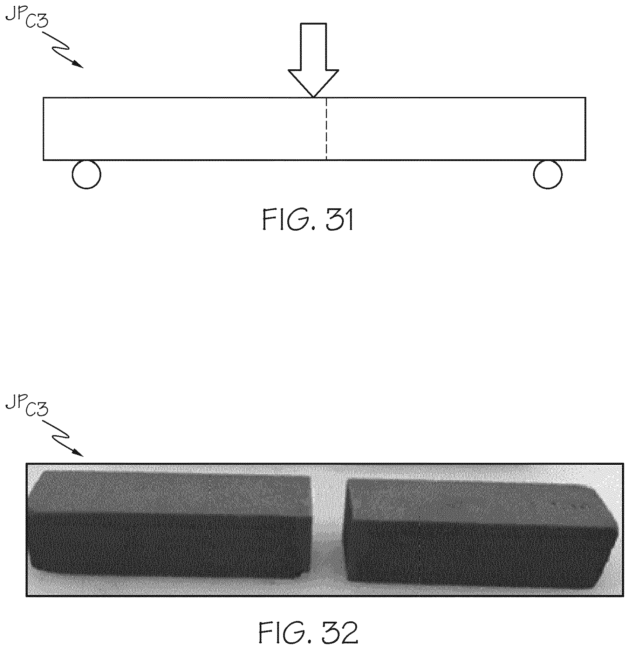

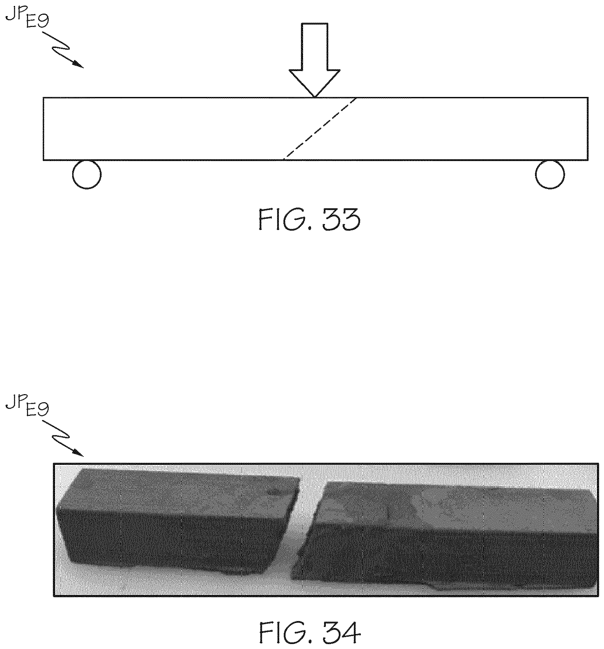

Referring now to FIGS. 31-34, control joined part JP_{C3} and example joined part JP_{E9} were produced by providing first and second green portions formed from Rene' 108 nickel alloy powder, applying Permabond 922 binder to the first green portion, and contacting the first and second green portions. The assembled portions were heated in an oven at 1300 °C for 12 hours to produce the joined parts. As shown in FIGS. 31 and 33, the interfacial joint of control joined part JP_{C3} was not angled and the interfacial joint of example joined part JP_{E9} was angled.

Referring now to FIGS. 32 and 34, a 3-point beam bending experiment was conducted. Control joined part JP_{C3} fractured at the joint at a fracture load of 24.4 kg. Example joined part JP_{E9} fractured at a similar fracture load of 23.8 kg, but did not fracture at the joint seam. As indicated by FIGS. 31-34, it may be beneficial for the interfacial joint to be angled to prevent fracture at the interfacial joint.

As described herein, various aspects of green body parts include a joint material comprising a powder having a particle size distribution than or equal to 1 µm and less than or equal to 50 µm, which results in a seamless interfacial joint and improved strength of the joint and part overall.

Further aspects of the disclosure are provided by the subject matter of the following clauses:
1. A green body part comprising: a first green portion comprising a first plurality of layers of a first particulate material; a second green portion comprising a second plurality of layers of a second particulate material; an interfacial joint between the first green portion and the second green portion; and a joint material disposed within the interfacial joint, the joint material comprising a powder having a particle size distribution greater than or equal to 1 µm and less than or equal to 50 µm.
2. The green body part of any preceding clause, wherein the powder comprises a metallic powder, the metallic powder comprising at least one of nickel alloy, stainless steel alloy, cobalt-chromium alloy, aluminum alloy, iron alloy, titanium alloy, copper alloy, and copper nickel alloy.
3. The green body part of any preceding clause, wherein the powder comprises a ceramic powder, the ceramic powder comprising at least one of alumina, aluminum nitride, zirconia, titania, silica, silicon nitride, silicone carbide, and boron nitride.
4. The green body part of any preceding clause, wherein the joint material further comprises a binder, the binder comprising a plurality of reactive monomers.
5. The green body part of any preceding clause, wherein the binder further comprises a thickening agent.
6. The green body part of any preceding clause, wherein the thickening agent comprises at least one of polystyrene, polycarbonate, and polyvinylpyrrolidone.
7. The green body part of any preceding clause, wherein the thickening agent has a molecular weight greater than or equal to 10,000 g/mol and less than or equal to 50,000 g/mol.
8. The green body part of any preceding clause, wherein a weight ratio of the powder to the binder in the j oint material is from 3:1 to 8:1.
9. The green body part of any preceding clause, wherein the joint material comprises greater than or equal to 75 wt% and less than or equal to 88 wt% of the powder and 12 wt% and less than or equal to 25 wt% of the binder.
10. The green body part of any preceding clause, wherein the joint material has a viscosity greater than or equal to 100 cP to and less than or equal to 50,000 cP.
11. The green body part of any preceding clause, wherein the plurality of reactive monomers comprises at least one of epoxy monomers, acrylate monomers, and vinyl ether monomers.
12. The green body part of any preceding clause, wherein the epoxy monomers comprise at least one of 3,4-epoxycyclohexylmethyl 3,4-epoxycyclohexanecarboxylate; diglycidyl 1,2-cyclohexanedicarboxylate; 1, 2, 7, 8-diepoxyoctane; dicyclopentadiene dioxide; 1,2-butanediol diglycidyl ether; and 1,2-epoxydodecane.
13. The green body part of any preceding clause, wherein the acrylate monomers comprise at least one of cyano acrylates, allyl cyano acryaltes, alkyl ayano acryaltes, neopentyl glycol propoxylate (1PH/OH) diacrylate, di(ethylene glycol) diacrylate, 1,6-hexanediol diacrylate, and tri(propylene glycol) diacrylate.
14. The green body part of any preceding clause, wherein the vinyl ether monomers comprise at least one of cyclohexyl vinyl ether, and diethylene glycol divinyl ether.
15. The green body part of any preceding clause, wherein the joint material further comprises greater than or equal to 0.01 wt% and less than or equal to 2 wt% of a thermal initiator, the thermal initiator comprising at least one of a blocked ammonium antimony hexafluoride catalyst; 1,1'-azobis(cyclohexanecarbonitrile); 2,2'-azobis(2-methylpropionitrile); (4-hydroxyphenyl)methyl(2-methylbenzyl)sulfonium hexafluoroantimonate; and benzyl(4-hydroxyphenyl)methylsulfonium hexafluoroantimonate.
16. The green body part of any preceding clause, wherein the interfacial joint has at least one curved portion.
17. The green body part of any preceding clause, wherein the powder comprises a same element as at least one of the first particulate material and a second particulate material.
18. The green body part of any preceding clause, wherein at least one of the first particulate material and the second particulate material comprises at least one of a metal particulate material, the metal particulate material comprising a nickel alloy, a cobalt alloy, a cobalt-chromium alloy, a titanium alloy, an aluminum-based alloy, a tungsten alloy, a stainless steel alloy, low carbon steel, and copper.
19. The green body part of any preceding clause, wherein at least one of the first particulate material and the second particulate material comprises a ceramic material, the ceramic material comprising at least one of alumina, aluminum nitride, zirconia, titania, silica, silicon nitride, silicon carbide, and boron nitride.
20. A method of manufacturing a joined part, the method comprising: providing a first green portion comprising a first plurality of layers of a first particulate material and a second green portion comprising a second plurality of layers of a second particulate material; applying a joint material on a face of the first green portion, the joint material comprising a powder having a particle size distribution greater than or equal to 1 µm and less than or equal to 50 µm; and contacting the second green portion to the joint material on the face of the first green portion to form a joined green body part having an interfacial joint between the first green portion and the second green portion.
21. The method of any preceding clause, wherein the powder comprises a metallic powder, the metallic powder comprising at least one of nickel alloy, stainless steel alloy, cobalt-chromium alloy, aluminum alloy, iron alloy, titanium alloy, copper alloy, and copper nickel alloy.
22. The method of any preceding clause, wherein the joint material further comprises a binder, the binder comprising a plurality of reactive monomers.
23. The method of any preceding clause, wherein the method further comprises heating the joined green body part at a temperature greater than or equal to 65 °C and less than or equal to 140 °C to cure the joint material.
24. The method of any preceding clause, wherein the method comprises: heating the joined green body part above a first temperature to remove at least a portion of the binder and sinter at least a portion of the powder such that the sintered powder forms necked regions between the first particulate material and second particulate material, thereby forming a joined brown body part; and heating the joined brown body part above a second temperature to sinter the first particulate material and second particulate material, thereby forming a joined consolidated part.

The above aspects, and the features of those aspects, are exemplary and can be provided alone or in any combination with any one or more features of other aspects provided herein without departing from the scope of the disclosure.

It will be apparent to those skilled in the art that various modifications and variations can be made to the present disclosure without departing from the spirit and scope of the disclosure. Thus, it is intended that the present disclosure cover the modifications and variations of this disclosure provided they come within the scope of the appended claims and their equivalents.

## Claims

1. A green body part (360) comprising:
a first green portion (340a) comprising a first plurality of layers (314) of a first particulate material (316a);
a second green portion (340b) comprising a second plurality of layers (314) of a second particulate material (316b);
an interfacial joint (362) between the first green portion (340a) and the second green portion (340b); and
a joint material (350) disposed within the interfacial joint (362), the joint material (350) comprising a powder having a particle size distribution greater than or equal to 1 µm and less than or equal to 50 µm.

2. The green body part (360) of claim 1, wherein the powder comprises a metallic powder, the metallic powder comprising nickel alloy, stainless steel alloy, cobalt-chromium alloy, aluminum alloy, iron alloy, titanium alloy, copper alloy, copper nickel alloy, or a combination thereof.

3. The green body part (360) of claim 1, wherein the powder comprises a ceramic powder, the ceramic powder comprising alumina, aluminum nitride, zirconia, titania, silica, silicon nitride, silicone carbide, boron nitride, or a combination thereof.

4. The green body part (360) of any one of claims 1 to 3, wherein the joint material (350) further comprises a binder, the binder comprising a plurality of reactive monomers.

5. The green body part (360) of claim 4, wherein the binder further comprises a thickening agent, the thickening agent comprising polystyrene, polycarbonate, polyvinylpyrrolidone, or a combination thereof.

6. The green body part (360) of claim 5, wherein the thickening agent has a molecular weight greater than or equal to 10,000 g/mol and less than or equal to 50,000 g/mol.

7. The green body part (360) of any one of claims 4 to 6, wherein a weight ratio of the powder to the binder in the j oint material is from 3:1 to 8:1.

8. The green body part (360) of any one of claims 4 to 7, wherein the joint material (350) comprises greater than or equal to 75 wt% and less than or equal to 88 wt% of the powder and 12 wt% and less than or equal to 25 wt% of the binder.

9. The green body part (360) of any one of claims 4 to 8, wherein the plurality of reactive monomers comprises epoxy monomers, acrylate monomers, vinyl ether monomers, or a combination thereof.

10. The green body part (360) of claim 9, wherein the epoxy monomers comprise 3,4-epoxycyclohexylmethyl 3,4-epoxycyclohexanecarboxylate; diglycidyl 1,2-cyclohexanedicarboxylate; 1, 2, 7, 8-diepoxyoctane; dicyclopentadiene dioxide; 1,2-butanediol diglycidyl ether; 1,2-epoxydodecane; or a combination thereof.

11. The green body part (360) of claim 9, wherein the acrylate monomers comprise cyano acrylates, allyl cyano acryaltes, alkyl ayano acryaltes, neopentyl glycol propoxylate (1PH/OH) diacrylate, di(ethylene glycol) diacrylate, 1,6-hexanediol diacrylate, tri(propylene glycol) diacrylate, or a combination thereof.

12. The green body part (360)of claim 9, wherein the vinyl ether monomers comprise cyclohexyl vinyl ether, diethylene glycol divinyl ether, or a combination thereof.

13. A method of manufacturing a joined part (360), the method comprising:
providing a first green portion (340a) comprising a first plurality of layers (314) of a first particulate material (316a) and a second green portion (340b) comprising a second plurality of layers (314) of a second particulate material (316b);
applying a joint material (350) on a face (352) of the first green portion (340a), the joint material (350) comprising a powder having a particle size distribution greater than or equal to 1 µm and less than or equal to 50 µm; and
contacting the second green portion (340b) to the joint material (350) on the face (352) of the first green portion (340a) to form a joined green body part (360) having an interfacial joint (362) between the first green portion (340a) and the second green portion (340b).

14. The method of claim 13, wherein the method further comprises heating the joined green body part (360) at a temperature greater than or equal to 65 °C and less than or equal to 140 °C to cure the joint material (350).

15. The method of claim 13 or claim 14, wherein the method comprises:
heating the joined green body part (360) above a first temperature to remove at least a portion of the binder and sinter at least a portion of the powder such that the sintered powder forms necked regions (366) between the first particulate material (316a) and second particulate material (316b), thereby forming a joined brown body part (370); and
heating the joined brown body part (370) above a second temperature to sinter the first particulate material (316a) and second particulate material (316b), thereby forming a joined consolidated part (380).
